# EUROPÄISCHE PATENTSCHRIFT

(11) **EP 4 035 918 B1**
(45) Veröffentlichungstag und Bekanntmachung des Hinweises auf die Patenterteilung: **28.08.2024**
(21) Anmeldenummer: 22151436.7
(22) Anmeldetag: 13.01.2022
(51) Int. Cl.: B60K 11/04

(54) **WÄRMETAUSCHER MIT DICHTLEISTE**
HEAT EXCHANGER WITH SEALING STRIP
ÉCHANGEUR DE CHALEUR POURVU DE BAGUETTE D'ÉTANCHÉITÉ

(30) Priorität: 27.01.2021 DE 102021101772
(43) Veröffentlichungstag der Anmeldung: 03.08.2022
(73) Patentinhaber: VOLKSWAGEN AG, 38440 Wolfsburg (DE)
(72) Erfinder: Diedrich, Mathias, 38165 Lehre (DE)
(74) Vertreter: Bungartz, Florian

(56) Entgegenhaltungen:
- EP-A1- 3 025 883
- EP-A1- 3 315 890
- US-B2- 7 857 038

## Beschreibung

Die Erfindung betrifft einen Wärmetauscher für ein Kühlsystem eines Kraftfahrzeugs. Insbesondere, betrifft die Erfindung einen Wärmetauscher nach dem Oberbegriff des ersten Anspruchs. Solch ein Wärmetauscher ist aus EP 3 315 890 A bekannt.

Wärmetauscher dienen dazu, eine Übertragung von Wärmeenergie zwischen zwei Medien, insbesondere Fluiden, zu ermöglichen, ohne die beiden Medien miteinander zu mischen. Derartige Wärmetauscher kommen beispielsweise in Kühlsystemen von Kraftfahrzeugen zum Einsatz, wobei in diesen Kühlsystemen Kühlmittel mittels einer oder mehrerer Kühlmittelpumpen in jeweils mindestens einem Kühlkreis gefördert wird. Dabei wird von dem Kühlmittel Wärmeenergie von in den Kühlkreisen integrierten Funktionskomponenten, wie beispielsweise einem Verbrennungsmotor, einem Ölkühler, einem Ladeluftkühler oder den elektrischen Antriebskomponenten eines elektrifizierten Kraftfahrzeugs aufgenommen. Diese Wärmeenergie wird anschließend in mindestens einem Kühlmittelkühler sowie zeitweise in einem Heizungswärmetauscher an Umgebungsluft, im Fall des Heizungswärmetauschers an die zur Klimatisierung des Innenraums des Kraftfahrzeugs vorgesehene Umgebungsluft, abgegeben. Ein Wärmetauscher, der als Kühlmittelkühler eines Kühlsystems eines Kraftfahrzeugs vorgesehen ist, ist aus der WO 2018/060626 A1 bekannt. Dieser Wärmetauscher umfasst in bekannter Weise ein sogenanntes Wärmetauschernetz sowie zwei Wärmetauscherkästen, die das rechteckige Wärmetauschernetz an zwei sich gegenüberliegenden Seiten begrenzen. Das Wärmetauschernetz umfasst eine Vielzahl von geradlinig verlaufenden, als Flachrohre ausgebildete Fluidleitungen, die für eine Durchströmung mittels eines Kühlmittels, sowie für eine Umströmung mittels Umgebungsluft vorgesehen und dabei für einen möglichst guten Wärmeübergang eingerichtet sind. Dazu sind die Fluidleitungen als Metallrohre mit dünnen Wandstärken ausgebildet, wobei zudem benachbarte Fluidleitungen jeweils mittels einer von der Umgebungsluft durchströmbaren Stützstruktur, die ebenfalls als metallische Blechstruktur mit dünnen Wandstärken ausgebildet ist, miteinander verbunden sind. Diese Stützstrukturen stellen nicht nur eine ausreichende Stabilität des Wärmetauschernetzes sicher, sondern verbessern zudem den Wärmeübergang zwischen dem Kühlmittel und der Umgebungsluft durch eine Vergrößerung der mit der Umgebungsluft in Kontakt kommenden Wärmetauschfläche. Die jeweils zwei offenen Enden der Fluidleitungen des Wärmetauschernetzes sind in entsprechende Öffnungen von zwei Rohrböden eingesteckt, wobei die beiden Rohrböden mit jeweils einem wannenförmigen Gehäuseteil die Wärmetauscherkästen ausbilden. Die Wärmetauscherkästen umfassen zusammen mindestens einen Einlass und einen Auslass für Kühlmittel und dienen dazu, das dem Wärmetauscher zugeführte Kühlmittel auf die einzelnen Fluidleitungen zu verteilen sowie Kühlmittel, das die Fluidleitung bereits durchströmt hat, wieder zu sammeln, um dieses von dem Wärmetauscher abzuführen. Eine Abdichtung zwischen den Rohrböden und den jeweils dazugehörigen wannenförmigen Gehäuseteilen erfolgt unter Verwendung von elastischen Dichtelementen.

Ein solcher Wärmetauscher wird üblicherweise als Fertigteil geliefert und im Rahmen der Herstellung eines Kraftfahrzeugs in einem Frontendmodul des Kraftfahrzeugs montiert. Dies kann beispielsweise dadurch erfolgen, dass der Wärmetauscher innerhalb eines Rahmens des Frontendmoduls positioniert und mit diesem verbunden wird. Um einen möglichst vorteilhaften Wärmeübergang zu ermöglichen sowie auch um Strömungsverluste der Umgebungsluft zu minimieren, kann es sinnvoll sein, Spalte, die zwischen dem Rahmen und dem Wärmetauscher ausgebildet sind, zu verschließen. Dadurch kann gewährleistet werden, dass möglichst die gesamte Umgebungsluft, die über einen Kühlergrill des Kraftfahrzeugs zu dem Wärmetauscher geführt wird, diesen beziehungsweise das Wärmetauschernetz davon durchströmt.

Die EP 3 315 890 A1 offenbart einen Wärmetauscher mit einem Wärmetauschernetz, das mittels eines Begrenzungselements seitlich begrenzt ist, wobei eine Dichtleiste, die einen Verbindungsabschnitt und eine Dichtlippe umfasst, formschlüssig mit dem Begrenzungselement verbunden ist.

Die US 7 857 038 B2 beschreibt einen Wärmetauscher, bei dem ein flächiges Dichtelement mit einem Begrenzungselement verklebt ist.

Die EP 3 025 883 A1 offenbart einen Wärmetauscher, bei dem eine rahmenförmige Dichtleiste um einen Wärmetauscher umläuft und dabei abschnittsweise zwischen zwei Wärmetauscherkästen angeordnet ist.

Der Erfindung lag die Aufgabe zugrunde, die beschriebenen Spalte zwischen einem Wärmetauscher und einer diesen umgebenden Struktur auf möglichst einfache und kostengünstige Weise zu verschließen.

Diese Aufgabe ist bei der Kombination eines Wärmetauschers gemäß dem Patentanspruch 1 und einer diesen umgebenden Struktur, wie es in dem Patentanspruch 9 beansprucht ist, gelöst. Vorteilhafte Ausgestaltungsformen dieses Wärmetauschers sind Gegenstände der weiteren Patentansprüche und/oder ergeben sich aus der nachfolgenden Beschreibung der Erfindung.

Erfindungsgemäß ist ein Wärmetauscher für ein Kühlsystem eines Kraftfahrzeugs vorgesehen, der zumindest ein Wärmetauschernetz sowie mindestens ein Begrenzungselement umfasst. Das Wärmetauschernetz weist zumindest eine Mehrzahl von Fluidleitungen auf, die für eine Durchströmung mittels eines ersten Wärmetauschfluids, insbesondere einer Wärmetauschflüssigkeit, und für eine Umströmung mittels eines zweiten Wärmetauschfluids, insbesondere eines Wärmetauschgases, vorzugsweise Luft, eingerichtet sind. Das Begrenzungselement begrenzt das Wärmetauschernetz an zumindest einer Seite. Weiterhin ist eine einstückige und aus einem elastischen Material ausgebildete Dichtleiste, die zumindest in einem Abschnitt der Längserstreckung (des Begrenzungselements) entlang des Begrenzungselements verläuft, vorgesehen, wobei die Dichtleiste einen Verbindungsabschnitt, der formschlüssig mit einem Verbindungsabschnitt des Begrenzungselements verbunden ist, und mindestens eine Dichtlippe, die zumindest in einem Abschnitt der Längserstreckung (des Verbindungsabschnitts) entlang des Verbindungsabschnitts verläuft, aufweist. Vorgesehen ist, dass von den Verbindungsabschnitten der Dichtleiste und des Begrenzungselements eines einen Abschnitt mit T-, L- oder J-förmiger Querschnittsfläche aufweist, der in einem Aufnahmeraum mit entsprechend T-, L- oder J-förmiger Öffnungsquerschnittsfläche des anderen Verbindungsabschnitts aufgenommen ist.

Die Erfindung betrifft auch eine Kombination eines erfindungsgemäßen Wärmetauschers und einer Struktur, die zumindest an das Begrenzungselement angrenzt, wobei zwischen dem Begrenzungselement und der Struktur ein Spalt ausgebildet ist, der zumindest teilweise durch die Dichtlippe der Dichtleiste verschlossen ist.

Als elastisch gilt das Material der Dichtleiste dann, wenn es so leicht elastisch verformt ist, dass sich dieses bei einem Kontakt mit der angrenzenden Struktur ohne erheblichen Kraftaufwand und insbesondere ohne eine relevante Deformation der angrenzenden Struktur verformt. Bei dem Material kann es sich vorzugsweise um ein Elastomer, insbesondere um ein TPV, d.h. um ein vernetztes thermoplastisches Elastomer auf Olefinbasis (z.B. EPDM) handeln.

Als Dichtlippe wird erfindungsgemäß ein flächiger, dünnwandiger Abschnitt der Dichtleiste verstanden, wobei zumindest ein Rand und vorzugsweise zwei oder drei Ränder dieses flächigen Abschnitts frei liegen und folglich nicht fest beziehungsweise dauerhaft an eine andere Komponente angebunden sind.

Durch die Dichtlippe der elastischen Dichtleiste kann eine einfaches Verschließen eines Spalts, der zwischen dem Wärmetauscher beziehungsweise dem Begrenzungselement sowie der den Wärmetauscher nach einer Montage des Wärmetauschers in einem größeren Komplex, wie beispielsweise dem Frontend eines Kraftfahrzeugs, umgebenden Struktur realisiert werden. Bei dieser Struktur kann es sich beispielsweise um einen Rahmen handeln. Durch die Verbindung beziehungsweise Befestigung der Dichtleiste mit dem Begrenzungselement des Wärmetauschers ist die Dichtleiste dabei integraler Bestandteil des Wärmetauschers, so dass mit dem Verschließen des Spalts kein über die übliche Montage des Wärmetauschers hinausgehender Montageaufwand einhergeht. Durch die einstückige Ausgestaltung der Dichtleiste ist diese zudem kostengünstig herstellbar. Gleichzeitig ermöglicht die formschlüssige Verbindung mit dem Begrenzungselement trotz der elastischen Ausgestaltung des Verbindungsabschnitts der Dichtleiste, die eine Folge der Einstückigkeit ist, einen sicheren Halt der Dichtleiste.

Um ein möglichst vollständiges Verschließen eines unter anderem von dem Begrenzungselement begrenzten Spalts zu ermöglichen, kann vorzugsweise vorgesehen sein, dass die Dichtlippe entlang der gesamten Längserstreckung des Verbindungsabschnitts verläuft.

Für ein möglichst vorteilhaftes Verschließen eines unter anderem von dem Begrenzungselement begrenzten Spalts kann weiterhin bevorzugt vorgesehen sein, dass zumindest eine Großfläche der Dichtlippe plan ausgestaltet ist. Eine Großfläche ist dabei eine der relativ großen Flächen der flächigen Dichtlippe, die sich von dem Übergang der Dichtlippe an den Verbindungsabschnitt der Dichtleiste bis zu dem oder den freien Rändern der Dichtlippe erstreckt.

Ein vorteilhaftes Verschließen eines relativ komplex geformten Spalts mittels der Dichtleiste eines erfindungsgemäßen Wärmetauschers kann dadurch realisiert werden, dass mindestens zwei Dichtlippen vorgesehen sind. Diese können weiterhin bevorzugt jeweils mindestens eine plane Großfläche aufweisen, wobei die planen Großflächen der verschiedenen Dichtlippen bezüglich ihrer Querstreckungen insbesondere auch nicht-parallel zueinander ausgerichtet sein können.

Gemäß einer bevorzugten Ausgestaltungsform eines erfindungsgemäßen Wärmetauschers kann vorgesehen sein, dass die formschlüssige Verbindung zwischen den Verbindungsabschnitten der Dichtleiste und des Begrenzungselements, d.h. die miteinander formschlüssig zusammenwirkenden Geometrie der Komponenten in Verbindung mit der Integration in den Wärmetauscher, derart ausgestaltet ist, dass diese durch eine Relativbewegung der Verbindungsabschnitte entlang ihrer Längserstreckungen und damit entlang des Verlaufs des Begrenzungselements an dem Wärmetauschernetz ausgebildet werden kann.

Ein erfindungsgemäßer Wärmetauscher kann vorzugsweise einen oder zwei Kühlerkästen umfassen, der/die zumindest einen Einlass und einen Auslass für ein Wärmetauschfluid aufweisen, wobei der Kühlerkasten oder die Kühlerkästen das Wärmetauschernetz (jeweils) an einer Seite begrenzt/begrenzen. Bei einer solchen Ausgestaltung eines erfindungsgemäßen Wärmetauschers kann der Kühlerkasten oder einer der Kühlerkästen (auch) das Begrenzungselement sein oder dieses umfassen. Alternativ dazu kann vorgesehen sein, dass ein längsaxiales Ende oder jeweils eines der beiden längsaxialen Enden des Begrenzungselements an den Kühlerkasten oder an einen der Kühlerkästen angrenzt. Dabei können das oder die längsaxialen Enden des Begrenzungselements den Kühlerkasten oder die Kühlerkästen insbesondere direkt kontaktieren und/oder damit fest und vorzugsweise auch unbeweglich verbunden sein.

Die Erfindung betrifft auch ein Kraftfahrzeug, insbesondere ein radbasiertes und nicht schienengebundenes Kraftfahrzeug (vorzugsweise ein PKW oder ein LKW) mit einem erfindungsgemäßen Wärmetauscher oder einer erfindungsgemäßen Kombination. Dabei kann der Wärmetauscher beispielsweise ein Kühlmittelkühler oder ein Ölkühler oder ein Ladeluftkühler oder ein Heizungswärmetauscher sein.

Die Erfindung wird nachfolgend anhand von in den Zeichnungen dargestellten Ausgestaltungsbeispielen näher erläutert. In den Zeichnungen zeigt, teilweise in vereinfachter Darstellung:
- Fig. 1:: einen erfindungsgemäßen Wärmetauscher gemäß einer ersten Ausgestaltungsform in einer perspektivischen Darstellung;
- Fig. 2:: eine Querschnittsansicht durch einen Abschnitt des Wärmetauschers;
- Fig. 3:: die Dichtleiste des Wärmetauschers in einer perspektivischen Ansicht;
- Fig. 4:: eine Querschnittsansicht durch einen Abschnitt eines erfindungsgemäßen Wärmetauschers gemäß einer zweiten Ausgestaltungsform; und
- Fig. 5:: eine Querschnittsansicht durch einen Abschnitt eines erfindungsgemäßen Wärmetauschers gemäß einer dritten Ausgestaltungsform.

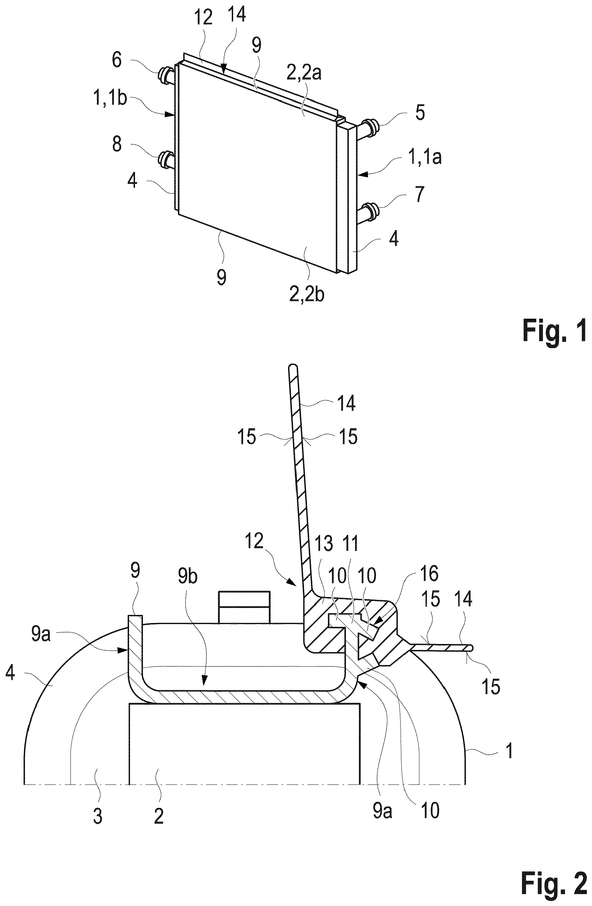

In der Fig. 1 ist eine beispielhafte Ausgestaltung eines erfindungsgemäßen Wärmetauschers dargestellt.

Der Wärmetauscher umfasst zwei länglich ausgebildete und parallel beabstandet zueinander ausgerichtete Wärmetauscherkästen 1 sowie ein zwischen den Wärmetauscherkästen 1 befindliches Wärmetauschernetz 2, das in den Zeichnungen vereinfacht dargestellt ist. Das Wärmetauschernetz 2 kann in bekannter Weise eine Mehrzahl von Wärmetauscherrohren 3, beispielsweise in Form von Flachrohren, umfassen, die sich in paralleler Ausrichtung zwischen den Wärmetauscherkästen 1 erstrecken und deren offene Enden in Innenräume der beiden Wärmetauscherkästen 1 münden. Endabschnitte der Wärmetauscherrohre können dazu durch Durchgangsöffnungen, die in jeweils einem Rohrboden 3 der beiden Wärmetauscherkästen 1 ausgebildet sind, geführt sein. Die Wärmetauscherkästen 1 umfassen jeweils neben einem der Rohrböden 3 ein wannenförmiges Gehäuse 4. Eine Verbindung zwischen den Rohrböden 3 und dem jeweils dazugehörigen Gehäuse 4 der beiden Wärmetauscherkästen 1 kann beispielsweise mittels einer Bördelverbindung realisiert sein.

In die Wärmetauscherkästen 1 und konkret in die wannenförmigen Gehäuse 4 davon sind mindestens ein Einlass 5 und mindestens ein Auslass 6 für ein Wärmetauschfluid (insbesondere eine Wärmetauschflüssigkeit) integriert. In dem Ausgestaltungsbeispiel gemäß der Fig. 1 ist der Wärmetauscher als Doppelwärmetauscher ausgestaltet, d.h. dieser umfasst zwei nebeneinander angeordnete Wärmetauscherteilnetze 2a, 2b, wobei die Wärmetauscherrohre der beiden Wärmetauscherteilnetze 2a, 2b in dieselben zwei Wärmetauscherkästen 1 münden. Dabei sind die Wärmetauscherkästen 1 jedoch zwischen den jeweils zwei Abschnitten, in die die Wärmetauscherrohre der verschiedenen Wärmetauscherteilnetze 2a, 2b münden, jeweils mittels einer Trennwand (nicht sichtbar) unterteilt. Demnach durchströmt das Wärmetauschfluid, das über einen ersten, oberen Einlass 5 eines ersten der Wärmetauscherkästen 1a einströmt, lediglich die Wärmetauscherrohre eines ersten, oberen der Wärmetauscherteilnetze 2a und wird über einen ersten, oberen Auslass 6, der in den zweiten Wärmetauscherkasten 1b integriert ist, wieder abgeführt. In gleicher Weise strömt ein anderer Teil des Wärmetauschfluids in einen zweiten, unteren Einlass 7 des ersten Wärmetauscherkastens 1a, durchströmt dann die Wärmetauscherrohre des zweiten, unteren Wärmetauschernetzes 2b und wird dann über einen zweiten, unteren Auslass 8 des zweiten Wärmetauscherkastens 1b abgeführt.

Ein Wärmeübergang von dem Wärmetauschfluid auf Kühlluft, die den Wärmetauscher durchströmt, erfolgt hauptsächlich im Bereich des Wärmetauschernetzes 2. um diesen Wärmeübergang zu optimieren können die Wärmetauscherrohre des Wärmetauschernetzes 2 vorzugsweise als Flachrohre ausgestaltet sein, wodurch diese ein relativ großes Verhältnis von umströmter Fläche zu durchströmtem Volumen aufweisen. Für eine weitere Verbesserung des Wärmeübergangs und auch für eine Verbesserung der strukturellen Stabilität des Wärmetauschers können in den Freiräumen, die zwischen den einzelnen Wärmetauscherrohren ausgebildet sind, Stützstrukturen in Form von sogenannten Wellrippen angeordnet sein. Hierbei kann es sich um mäanderförmig entlang der jeweils zwei angrenzenden Wärmetauscherrohre verlaufende Bleche handeln, die mit den Wärmetauscherrohren fest verbundenen, beispielsweise verlötet sind. Diese Stützstrukturen verbessern einen Wärmeübergang von dem Wärmetauschfluid auf die Kühlluft, indem sich diese durch den Kontakt mit den Wandungen der Wärmetauscherrohre erwärmen und so die für einen Wärmetausch mit der Kühlluft zur Verfügung stehende Fläche vergrößern. Für eine möglichst hohe Wärmeleitfähigkeit bei gleichzeitig möglichst geringen Herstellungskosten kann das gesamte Wärmetauschernetz 2 vorzugsweise aus Metall, beispielsweise aus Aluminiumblech, ausgestaltet sein.

Der Wärmetauscher umfasst weiterhin noch zwei Begrenzungselemente 9, die jeweils in Form einer Profilleiste ausgestaltet sind und die das Wärmetauschernetz 2 an den beiden Rändern, die sich zwischen den beiden Wärmetauscherkästen 1 erstrecken, begrenzen. Dadurch wird unter anderem die strukturelle Stabilität des Wärmetauschers verbessert. Die Begrenzungselemente 9 sind dabei sowohl mit dem Wärmetauschernetz 2 als auch mit den beiden Wärmetauscherkästen 1 fest verbunden, beispielsweise verlötet.

Gemäß den Fig. 2, 4 und 5 können die Begrenzungselemente 9 unterschiedliche Querschnittsflächenformen aufweisen, wobei jeweils eine in etwa U-förmige Querschnittsfläche vorliegt, so dass sich für die Begrenzungselemente 9 jeweils grundsätzlich die Form einer Rinne ergibt. Dadurch ist mit einem relativ geringen Materialeinsatz und damit auch einem relativ geringen Gewicht eine relativ hohe Steifigkeit der Begrenzungselemente 9 und damit eine entsprechend gute strukturelle Stabilität des Wärmetauschers realisierbar. Bei dem Wärmetauscher gemäß den Fig. 2 umfasst eine der beiden Seitenwände 9a der einzelnen Begrenzungselemente 9 an ihrer Längskante zwei entgegengesetzt seitlich verlaufende Fortsätze 10, wodurch sich ein T-rohrförmiger Abschnitt der Querschnittfläche dieser Seitenwand 9a ergibt. Unterhalb des außen gelegenen Fortsatzes 10 ist ein weiterer Fortsatz 10 vorgesehen, der sich ebenfalls, d.h. wie die beiden an der Längskanten gelegenen Fortsätze 10, über die gesamte Längserstreckung des jeweiligen Befestigungselements 9 erstreckt. Die beiden außen gelegenen Fortsätze 10 verlaufen dabei in Querrichtung geneigt, wobei sich diese einander annähern. Dadurch begrenzen diese einen im Querschnitt in etwa trapezförmigen Spalt.

Der T-förmige Abschnitt der einen Seitenwand 9a stellt einen Verbindungsabschnitt 11 des Begrenzungselements dar, der zur Anordnung innerhalb eines entsprechend T-förmig ausgebildeten Aufnahmeraums 16, der innerhalb eines Verbindungsabschnitts 13 einer Dichtleiste 12 vorliegt, vorgesehen ist. Dadurch ist eine formschlüssige Verbindung zwischen dem Begrenzungselement 9 und der Dichtleiste 12 realisiert, wobei diese formschlüssige Verbindung durch eine Relativbewegung zwischen der Dichtleiste 12 und dem Begrenzungselement 9 beziehungsweise durch ein Aufschieben der Dichtleiste 12 auf den Verbindungsabschnitt 11 des Begrenzungselements 9 in Längsrichtung beziehungsweise entlang der Längserstreckungen des Begrenzungselements 9 sowie der Dichtleiste 12 ausgebildet wird.

Die Dichtleiste 12 des Wärmetauschers gemäß der Fig. 2 umfasst neben dem Verbindungsabschnitt 13 noch zwei Dichtlippen 14, deren zwei parallel zueinander verlaufende Großflächen 15 jeweils plan ausgebildet sind, wobei die Großflächen 15 der einen Dichtlippe 14 im Vergleich zu den Großflächen 15 der anderen Dichtlippe 14 nicht-parallel beziehungsweise in einem Winkel, der etwas größer als 90° ist, zueinander ausgerichtet sind. Ein erste dieser Dichtlippen 14, nämlich diejenige, die quer zu der Richtung der Durchströmung des Wärmetauschernetzes 2 mittels der Kühlluft verläuft, dient dazu, einen Spalt, der einerseits zwischen dem Begrenzungselement 9 beziehungsweise dem Wärmetauscher und andererseits einem den Wärmetauscher tragenden Rahmen (nicht dargestellt) ausgebildet ist, zu verschließen. Dadurch soll verhindert werden, dass Kühlluft, die für eine Durchströmung des Wärmetauschernetzes 2 vorgesehen ist, durch diesen Spalt strömt und dadurch das Wärmetauschernetz 2 umgeht. Die zweite dieser Dichtlippen 14 soll dagegen einen Spalt, der zwischen dem Wärmetauscher und einem sich daran anschließenden Gehäuse, beispielsweise dem Gehäuses eines Gebläses, verschließen, um durch eine möglichst leckagefreie Anbindung des Gebläses an den Wärmetauscher eine vorteilhafte Strömungsführung für die Kühlluft zu realisieren.

Die Dichtleiste 12 ist einstückig und materialeinheitlich aus beispielsweise EPDM ausgestaltet, wodurch sich eine kostengünstige Herstellbarkeit ergibt. Die konkrete Art der formschlüssigen Verbindung zwischen der Dichtleiste 12 und dem Begrenzungselement 9 beziehungsweise den Verbindungsabschnitten 11, 13 davon gewährleistet trotz der Elastizität der Dichtleiste 12 und damit auch des dazugehörigen Verbindungsabschnitts 13 eine sichere Verbindung mit dem Verbindungsabschnitt 11 des Begrenzungselements 9.

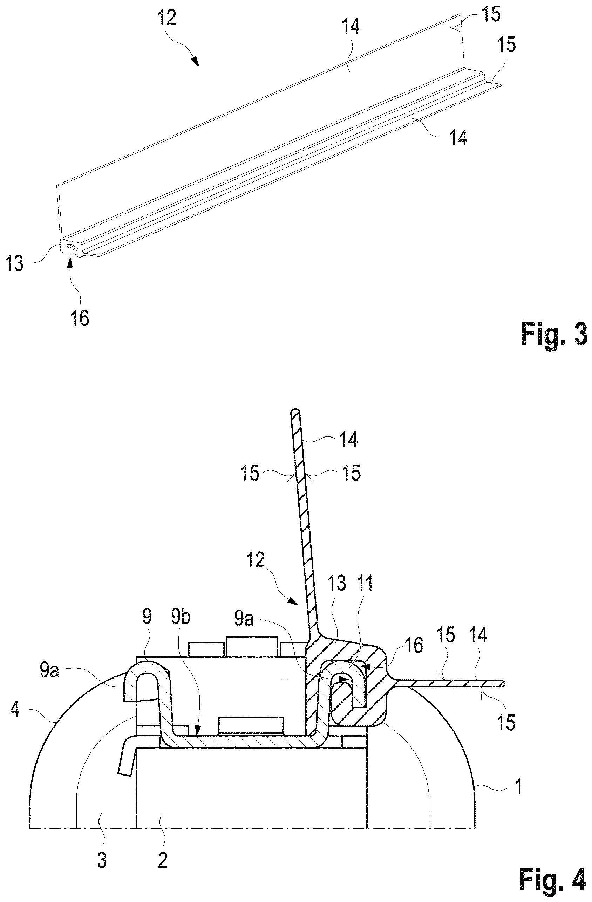

Die in der Fig. 4 dargestellte Ausgestaltungsform eines erfindungsgemäßen Wärmetauschers unterscheidet sich von derjenigen gemäß den Fig. 1 bis 3 lediglich in der Ausgestaltung der Querschnittsformen des Begrenzungselements 9 und damit insbesondere auch des Verbindungsabschnitts 11 davon sowie in der daran angepassten Ausgestaltung des Verbindungsabschnitts 13 der Dichtleiste 12. Die Seitenwände 9a des Begrenzungselements 9 gemäß der Fig. 4 weisen J-förmige Querschnittsflächen auf, so dass sich auch ein Verbindungsabschnitt 11 mit entsprechend J-förmiger Querschnittsfläche ergibt, der für eine Anordnung innerhalb eines Aufnahmeraums 16 des Verbindungsabschnitts 13 der Dichtleiste mit J-förmiger Öffnungsquerschnittsfläche vorgesehen ist. Dadurch liegt wiederum eine formschlüssige Verbindung zwischen den beiden Verbindungsabschnitten 11, 13 vor. Zur Ausbildung dieser formschlüssigen Verbindung kann die Dichtleiste 12 wiederum in Längsrichtung auf den Verbindungsabschnitt 11 des Begrenzungselements 9 aufgeschoben werden. Alternativ dazu besteht in diesem Fall auch die Möglichkeit, die Verbindung durch eine Teilrotation der Dichtleiste 12 (entgegen dem Uhrzeigersinn in der Fig. 4) auszubilden, was aufgrund der Elastizität, den auch der Verbindungsabschnitt 13 der Dichtleiste 12 aufweist, möglich ist.

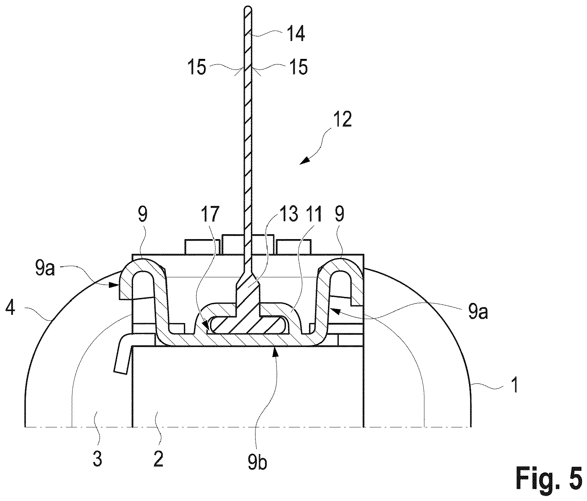

Die Dichtleiste 12 des Wärmetauschers gemäß der Fig. 5 unterscheidet sich von demjenigen der anderen Wärmetauscher einerseits darin, dass lediglich eine Dichtlippe 14 vorgesehen ist. Diese erstreckt sich quer und insbesondere senkrecht zu der Richtung der Durchströmung des Wärmetauschernetzes 2 mittels der Kühlluft. Weiterhin weist der Verbindungsabschnitt 13 dieser Dichtleiste 12 T-förmige Querschnittsflächen auf, wobei dieser Verbindungsabschnitt 13 teilweise in einem Aufnahmeraum 17 des Begrenzungselements 9 mit T-förmiger Öffnungsquerschnittsfläche angeordnet ist. Dieser Aufnahmeraum 17 wird von einem Verbindungsabschnitt 11 des Begrenzungselements 9 ausgebildet, der innerhalb der Senke des rinnenförmigen Begrenzungselements 9 angeordnet ist und dabei an den Boden 9a des Begrenzungselements 9 angrenzt. Auch diese Dichtleiste 12 kann zur Ausbildung einer formschlüssigen Verbindung mit ihrem Verbindungsabschnitt 13 in den Aufnahmeraum 17 des Verbindungsabschnitts 11 des Begrenzungselements 9 auf- beziehungsweise eingeschoben werden.

### BEZUGSZEICHENLISTE

- 1: Wärmetauscherkasten
- 1a: erster Wärmetauscherkasten
- 1b: zweiter Wärmetauscherkasten
- 2: Wärmetauschernetz
- 2a: erstes Wärmetauscherteilnetz
- 2b: zweites Wärmetauscherteilnetz
- 3: Rohrboden des Wärmetauscherkastens
- 4: Gehäuse des Wärmetauscherkastens
- 5: erster Einlass
- 6: erster Auslass
- 7: zweiter Einlass
- 8: zweiter Auslass
- 9: Begrenzungselement
- 9a: Seitenwand des Begrenzungselements
- 9b: Boden des Begrenzungselements
- 10: Fortsatz
- 11: Verbindungsabschnitt des Begrenzungselements
- 12: Dichtleiste
- 13: Verbindungsabschnitt der Dichtleiste
- 14: Dichtlippe der Dichtleiste
- 15: Großfläche der Dichtlippe
- 16: Aufnahmeraum des Verbindungsabschnitts der Dichtleiste
- 17: Aufnahmeraum des Verbindungsabschnitts des Begrenzungselements

## Patentansprüche

1. Wärmetauscher für ein Kühlsystem eines Kraftfahrzeugs mit einem Wärmetauschernetz (2), das eine Mehrzahl von Fluidleitungen umfasst, die für eine Durchströmung mittels eines ersten Wärmetauschfluids und für eine Umströmung mittels eines zweiten Wärmetauschfluids eingerichtet sind, und mit einem Begrenzungselement (9), das das Wärmetauschernetz (2) an zumindest einer Seite begrenzt, wobei eine einstückige und aus einem elastischen Material ausgebildete Dichtleiste (12), die zumindest in einem Abschnitt der Längserstreckung entlang des Begrenzungselements (9) verläuft, vorgesehen ist, wobei die Dichtleiste (12) einen Verbindungsabschnitt (13), der formschlüssig mit einem Verbindungsabschnitt (11) des Begrenzungselements (9) verbunden ist, und mindestens eine Dichtlippe (14), die zumindest in einem Abschnitt der Längserstreckung entlang des Verbindungsabschnitts (13) der Dichtleiste (12) verläuft, aufweist, **dadurch gekennzeichnet, dass** von den Verbindungsabschnitten (11, 13) der Dichtleiste (12) und des Begrenzungselements (9) einer einen Abschnitt mit T-, L- oder J-förmiger Querschnittsfläche aufweist, der in einem Aufnahmeraum mit T-, L- oder J-förmiger Öffnungsquerschnittsfläche des anderen Verbindungsabschnitts (11, 13) aufgenommen ist.

2. Wärmetauscher gemäß Anspruch 1, **dadurch gekennzeichnet, dass** die Dichtlippe (14) entlang der gesamten Längserstreckung des Verbindungsabschnitts (13) der Dichtleiste (12) verläuft.

3. Wärmetauscher gemäß einem der vorhergehenden Ansprüche, **dadurch gekennzeichnet, dass** zumindest eine Großfläche (15) der Dichtlippe (14) plan ausgebildet ist.

4. Wärmetauscher gemäß Anspruch 3, **gekennzeichnet durch** mindestens zwei Dichtlippen (14), die jeweils mindestens eine plane Großfläche (15) aufweisen, wobei die planen Großflächen (15) der verschiedenen Dichtlippen (14) bezüglich ihrer Querstreckungen nicht-parallel zueinander ausgerichtet sind.

5. Wärmetauscher gemäß einem der vorhergehenden Ansprüche, **gekennzeichnet durch** eine Ausgestaltung der formschlüssigen Verbindung zwischen den Verbindungsabschnitten (11, 13) der Dichtleiste (12) und des Begrenzungselements (9) derart, dass diese durch eine Relativbewegung der Verbindungsabschnitte (11, 13) entlang ihrer Längserstreckungen ausgebildet werden kann.

6. Wärmetauscher gemäß einem der vorhergehenden Ansprüche, **gekennzeichnet durch** einen oder zwei Wärmetauscherkästen (1), der/die zumindest einen Einlass (5, 7) und einen Auslass (6, 8) für ein Wärmetauschfluid aufweisen, wobei der Wärmetauscherkasten (1) oder die Wärmetauscherkästen (1) das Wärmetauschernetz (2) (jeweils) an einer Seite begrenzt/begrenzen.

7. Wärmetauscher gemäß Anspruch 6, **dadurch gekennzeichnet, dass** der Wärmetauscherkasten (1) oder einer der Wärmetauscherkästen (1) das Begrenzungselement (9) ist oder umfasst.

8. Wärmetauscher gemäß Anspruch 6, **dadurch gekennzeichnet, dass** (jeweils) ein längsaxiales Ende des Begrenzungselements (9) an den Wärmetauscherkasten (1) oder an die Wärmetauscherkästen (1) angrenzt.

9. Kombination eines Wärmetauschers gemäß einem der vorhergehenden Ansprüche und einer zumindest an das Begrenzungselement (9) angrenzenden Struktur, wobei zwischen dem Begrenzungselement (9) und der Struktur ein Spalt ausgebildet ist, der zumindest teilweise durch die Dichtlippe (14) der Dichtleiste (12) verschlossen ist.

## Claims

1. Heat exchanger for a cooling system of a motor vehicle, comprising a heat exchanger network (2) which comprises a plurality of fluid lines which are configured to be flowed through by a first heat exchange fluid and to be flowed around by a second heat exchange fluid, and comprising a delimiting element (9) which delimits the heat exchanger network (2) on at least one side, wherein an integral sealing strip (12) which is formed from an elastic material and runs at least in a portion of the longitudinal extent along the delimiting element (9) is provided, wherein the sealing strip (12) has a connecting portion (13), which is form-fittingly connected to a connecting portion (11) of the delimiting element (9), and at least one sealing lip (14), which runs at least in a portion of the longitudinal extent along the connecting portion (13) of the sealing strip (12), **characterized in that** one of the connecting portions (11, 13) of the sealing strip (12) and the delimiting element (9) has a portion of T-shaped, L-shaped or J-shaped cross-sectional area which is received in a receiving space of T-shaped, L-shaped or J-shaped cross-sectional area of the other connecting portion (11, 13).

2. Heat exchanger according to Claim 1, **characterized in that** the sealing lip (14) runs along the entire longitudinal extent of the connecting portion (13) of the sealing strip (12).

3. Heat exchanger according to either of the preceding claims, **characterized in that** at least one large surface (15) of the sealing lip (14) is planar.

4. Heat exchanger according to Claim 3, **characterized by** at least two sealing lips (14) which each have at least one planar large surface (15), wherein the planar large surfaces (15) of the different sealing lips (14) are oriented non-parallel to one another with respect to their transverse extents.

5. Heat exchanger according to one of the preceding claims, **characterized by** the form-fitting connection between the connecting portions (11, 13) of the sealing strip (12) and of the delimiting element (9) being designed in such a way that it can be formed by a relative movement of the connecting portions (11, 13) along their longitudinal extents.

6. Heat exchanger according to one of the preceding claims, **characterized by** one or two heat exchanger boxes (1) which has/have at least one inlet (5, 7) and one outlet (6, 8) for a heat exchange fluid, wherein the heat exchanger box (1) or the heat exchanger boxes (1) delimits/delimit the heat exchanger network (2) (in each case) on one side.

7. Heat exchanger according to Claim 6, **characterized in that** the heat exchanger box (1) or one of the heat exchanger boxes (1) is or comprises the delimiting element (9).

8. Heat exchanger according to Claim 6, **characterized in that** (in each case) one longitudinal axial end of the delimiting element (9) adjoins the heat exchanger box (1) or the heat exchanger boxes (1).

9. Combination of a heat exchanger according to one of the preceding claims and of a structure which adjoins at least the delimiting element (9), wherein a gap is formed between the delimiting element (9) and the structure and is at least partially closed by the sealing lip (14) of the sealing strip (12).

## Revendications

1. Echangeur de chaleur pour un système de refroidissement d'un véhicule automobile, comprenant un réseau d'échangeur de chaleur (2) qui comprend une pluralité de conduites de fluide qui sont aménagées pour être traversées au moyen d'un premier fluide d'échange thermique et pour être contournées au moyen d'un deuxième fluide d'échange thermique, et un élément de délimitation (9) qui délimite le réseau d'échangeur de chaleur (2) sur au moins un côté, dans lequel une baguette d'étanchéité (12) monobloc et réalisée à partir d'un matériau élastique est prévue qui s'étend au moins dans une partie de l'étendue longitudinale le long de l'élément de délimitation (9), dans lequel la baguette d'étanchéité (12) présente une partie de liaison (13) qui est reliée par complémentarité de forme à une partie de liaison (11) de l'élément de délimitation (9), et au moins une lèvre d'étanchéité (14) qui s'étend au moins dans une partie de l'étendue longitudinale le long de la partie de liaison (13) de la baguette d'étanchéité (12), **caractérisé en ce que** parmi les parties de liaison (11, 13) de la baguette d'étanchéité (12) et de l'élément de délimitation (9) l'un présente une partie ayant une superficie de section transversale en forme de T, de L ou de J qui est reçue dans un espace de réception ayant une superficie de section transversale d'ouverture en forme de T, de L ou de J de l'autre partie de liaison (11, 13) .

2. Echangeur de chaleur selon la revendication 1, **caractérisé en ce que** la lèvre d'étanchéité (14) s'étend le long de toute l'étendue longitudinale de la partie de liaison (13) de la baguette d'étanchéité (12) .

3. Echangeur de chaleur selon l'une quelconque des revendications précédentes, **caractérisé en ce qu'**au moins une surface principale (15) de la lèvre d'étanchéité (14) est réalisée de manière plane.

4. Echangeur de chaleur selon la revendication 3, **caractérisé par** au moins deux lèvres d'étanchéité (14) qui présentent respectivement au moins une surface principale plane (15), dans lequel les surfaces principales planes (15) des différentes lèvres d'étanchéité (14) sont orientées de manière non parallèle les unes par rapport aux autres par rapport à leurs étendues transversales.

5. Echangeur de chaleur selon l'une quelconque des revendications précédentes, **caractérisé par** une configuration de la liaison par complémentarité de forme entre les parties de liaison (11, 13) de la baguette d'étanchéité (12) et de l'élément de délimitation (9) de telle sorte qu'elle peut être réalisée par un mouvement relatif des parties de liaison (11, 13) le long de leurs étendues longitudinales.

6. Echangeur de chaleur selon l'une quelconque des revendications précédentes, **caractérisé par** un ou deux caissons d'échangeur de chaleur (1) qui présente(nt) au moins une entrée (5, 7) et une sortie (6, 8) pour un fluide d'échange thermique, dans lequel le caisson d'échangeur de chaleur (1) ou les caissons d'échangeur de chaleur (1) délimite(nt) le réseau d'échangeur de chaleur (2) (respectivement) sur un côté.

7. Echangeur de chaleur selon la revendication 6, **caractérisé en ce que** le caisson d'échangeur de chaleur (1) ou l'un des caissons d'échangeur de chaleur (1) est ou comprend l'élément de délimitation (9).

8. Echangeur de chaleur selon la revendication 6, **caractérisé en ce que** (respectivement) une extrémité axiale longitudinale de l'élément de délimitation (9) est adjacente au caisson d'échangeur de chaleur (1) ou aux caissons d'échangeur de chaleur (1).

9. Combinaison d'un échangeur de chaleur selon l'une quelconque des revendications précédentes et d'une structure adjacente au moins à l'élément de délimitation (9), dans lequel un interstice est réalisé entre l'élément de délimitation (9) et la structure, qui est fermé au moins partiellement par la lèvre d'étanchéité (14) de la baguette d'étanchéité (12).
